# EUROPEAN PATENT SPECIFICATION

(11) **EP 2 617 607 B1**
(45) Date of publication and mention of the grant of the patent: **06.07.2016**
(21) Application number: 12151660.3
(22) Date of filing: 19.01.2012
(51) Int. Cl.: B60R 21/233

(54) **Airbag arrangement**
Airbaganordnung
Agencement d'airbag

(43) Date of publication of application: 24.07.2013
(73) Proprietor: Volvo Car Corporation, 40531 Göteborg (SE)
(72) Inventor: Kling, Anders, 42344 Torslanda (SE); Wågström, Linus, 44935 Nödinge (SE)
(74) Representative: Kraenzmer, Martin

(56) References cited:
- EP-A1- 0 832 795
- EP-A1- 1 686 017
- WO-A1-2012/111073
- DE-A1-102009 052 691
- US-A1- 2011 012 328

## Description

### TECHNICAL FIELD

The present disclosure relates to an airbag arrangement for a vehicle. The disclosure further relates to a vehicle comprising such an airbag arrangement and a method for inflating such an airbag arrangement.

### BACKGROUND

It is well known in the prior art to provide an airbag assembly and/or to include an inflatable airbag for protecting occupants seated in a vehicle during a collision or an accident. Such inflatable airbags are known to be deployable from a number of different locations at the interior of the vehicle including a steering column, a dashboard, a side door and an interior of the roof line. The term airbag is used herein also for a bag containing another gas or gas mixture than air. Further, regarding the airbag arrangement, terms formed from deploy, such as deployment, deployable etc, are used in parallel with terms formed from inflate, such as inflating, inflation, inflatable etc, having substantially the same meaning, since the airbag arrangement is deployed by inflating it.

Known airbags have a number of different configurations and inflation characteristics depending on the location in the vehicle and desired function. By way of example, airbags deployable from the steering column, such as a driver airbag, and the dashboard, such as a passenger airbag, are typically inflated and thereafter decompressed as the person to be protected impacts with the airbag. It is also known to utilize side impact protection airbags, e.g. airbags of generally curtain-like configuration deployable from the interior roof line, which may remain inflated for an extended period of time, so as to provide a cushioning restraint during an extended roll-over event lasting for several seconds.

Airbag assemblies, as are known in the prior art, typically include a gas generating inflator, which is stored in fluid communication with the inflatable airbag. Upon sensing a certain predetermined vehicle condition, such as a certain amount of vehicle deceleration, a sensor sends a signal to the inflator thereby trigging a discharge of the inflation gas into the airbag. As the inflation gas enters the airbag, the airbag is forced into a deployed state for protection of the occupant within the vehicle.

In modern vehicles, it is common to combine airbags in front of the occupants, such as a driver airbag, located in the steering column for the driver, or a passenger airbag, located in the dashboard for a front seat passenger, and side impact protection airbags, such as inflatable curtains. The side impact protection airbags are intended to prevent or to mitigate the consequences of collisions between side structures of the vehicle and parts of a passenger's body during a crash.

There are however certain types of collisions between a vehicle and an object, wherein the known airbags in front of the occupants combined with inflatable curtains according to prior art may provide a poor protection for the occupants in a vehicle. This is especially the case if the vehicle hits an object, or is hit by an object, such that the forces of impact are directed along a diagonal of the vehicle. Such situations may occur e. g. when the vehicle collides with an object hitting obliquely from the front or obliquely from the back. Other circumstances when such forces may occur are e.g. during a roll-over of the vehicle or during a multiple impact collision involving many vehicles. During such situations, there is a big risk that a driver or a passenger in the front seat vehicle may be thrown towards an A-pillar of the vehicle. There is hence a risk that the person is thrown in a direction in between the airbag in front of the person and the side impact protection airbag.

EP 0 832 795 A1 discloses an airbag arrangement according to the preamble of claim 1.

Document EP 1 541 426 B1 discloses an airbag arrangement comprising a side impact protection airbag which extends across and past the A-pillar such that a portion of it partly covers the windscreen. Thereby the person in the vehicle will be protected also if thrown in the direction against the A-pillar.

However, an airbag arrangement as the one disclosed in EP 1 541 426 B1 is fairly large and will need a lot of gas to inflate properly. The gas-generating inflator is dimensioned in order to fill the whole volume of the airbag arrangement of EP 1 541 426 B1. Hence more than one gas generator may be needed. Further, in case of an impact from the side of the vehicle, the portion of the airbag partly covering the windscreen would be unnecessary for protecting the vehicle occupant. Correspondingly, if the vehicle is impacted from the front, the portion of the airbag covering the side of the vehicle compartment would be unnecessary for protecting the vehicle occupant. In both cases unnecessary airbag volume is inflated.

### SUMMARY

The object of the present disclosure is to overcome or ameliorate at least one of the disadvantages of the prior art, or to provide a useful alternative.

It is desirable to provide an airbag arrangement being able to perform the task of at least partly covering a portion of the A-pillar and/or a space below the A-pillar and yet using less inflation gas than known airbag arrangements.

The object above may be achieved by the subject-matter of claim 1.

Thus, in a first aspect of the present invention there is provided an airbag arrangement for a vehicle. The airbag arrangement comprises
- an inflatable first airbag chamber, and
- an inflatable second airbag chamber,
wherein the second airbag chamber forms a separate optionally inflatable airbag chamber connected to the first airbag chamber, the second airbag chamber being adapted to in a deployed state at least partly cover a portion of the A-pillar and/or a space below the A-pillar.

The first airbag chamber may be a side impact protection airbag, a driver airbag or a passenger airbag. The airbag arrangement is arranged to cooperate with the adjacent airbag. In case the first airbag chamber is a side impact protection airbag, the airbag arrangement is adapted to cooperate with the driver airbag, if located at the driver's side of the vehicle, or adapted to cooperate with the passenger airbag, if located at the front seat passenger's side of the vehicle. In case the first airbag chamber is a driver airbag, the airbag arrangement is adapted to cooperate with the side impact protection airbag at the driver's side of the vehicle. In case the first airbag chamber is a passenger airbag, airbag arrangement is adapted to cooperate with the side impact protection airbag at the corresponding side. Side impact protection airbags, driver airbags and passenger airbags are known by the skilled person, and will not be more detailedly described herein.

Since the second airbag chamber is optionally inflatable, it may be inflated when desired, e.g. when a predetermined vehicle condition is met. Thereby, it is avoided to inflate unnecessary airbag volume, making it possible to use a smaller gas generator and/or fewer gas generators as compared to known airbag arrangements, such as the one of EP 1 541 426 B1. Less airbag volume to inflate may also result in less time for filling the airbag.

The first airbag chamber may comprise several internal airbag chambers, e.g. formed by internal seams of the first airbag chamber. However, the second airbag chamber is a separate unit, which is optionally inflatable, and does hence not form part of the first airbag chamber, although it is connected to the first airbag chamber. One, two, three or more connections may be used.

In the deployed state, the second airbag chamber is intended to cover a portion of the A-pillar and/or a space below the A-pillar. Thereby, the space in between the side impact protection airbag and the driver/passenger airbag may be at least partly covered. The second airbag chamber will hence prevent the person in the front seat, be it a driver or a front seat passenger, from impacting with the A-pillar, or at least mitigate the consequences of such an incident. The second airbag chamber may cover the whole portion of the A-pillar being located along the windscreen or a part thereof. The term "space below the A-pillar" relates to the spatial region of the compartment being located below the portion of the A-pillar, which portion is located along the windscreen.

The second airbag chamber may be adapted to in a deployed state further cover at least partly a space between the A-pillar and the dashboard of the vehicle.

The first airbag chamber, in case it is a side impact protection airbag, may be arranged such that it in the deployed state is supported by portions of the vehicle body, such as the A-, B-, C-pillars of the vehicle, the roof line and/or the frame of the doors. The second airbag chamber may also be arranged such that it in the deployed state is supported by portions of the vehicle body, such as the A-pillar, the dashboard and the door frame.

In an embodiment, the second airbag chamber forms a separate airbag, however connected to the first airbag chamber, which in that case also forms a separate airbag. The airbag arrangement in that case comprises a first airbag and a second airbag connected to each other. Both the first and second airbags may be surrounded by an external seam along the respective circumference. It is possible to locate the second airbag, such that a portion of it partly overlaps the first airbag in a deployed state. A portion of the external seam of the first airbag may then be on top of or side by side with a portion of the external seam of the second airbag. In that case a common external seam may be used for the portions of the respective external seams being on top of or beside each other.

In an embodiment, the airbag arrangement comprises activation means for separate deployment of the second airbag chamber. The second airbag chamber may be inflated independently of the first airbag chamber. The activation means may be a valve, as is more detailedly described below. In that case, the first airbag chamber and the second airbag chamber may have a common inflator. It is also possible that the second airbag chamber comprises its own inflator, such that the first airbag chamber and the second airbag chamber are inflated by separate inflators.

The connection between the first airbag chamber and the second airbag chamber may form at least one gas duct. There may also be a plurality of gas ducts, such as two, three or more. The gas duct/s may be used for transporting the gas used to inflate the second airbag chamber from the first airbag chamber. The gas may also flow in the reverse direction, i.e. from the second airbag chamber to the first airbag chamber. As mentioned above, the activation means may be a valve controlling the gas flow through the gas duct. Preferably the number of valves corresponds to the number of gas ducts. If the first and second airbag chambers are separate airbags, as mentioned for the exemplary embodiment above, the at least one gas duct or plurality of gas ducts may form the only connection between the first airbag and the second airbag.

In a preferred embodiment, the first airbag chamber comprises an inflator, such as a gas generator, for at least partly inflating the first airbag chamber, the inflator also being used for inflating the second airbag chamber, preferably via the gas duct mentioned above. Thereby, one inflator is enough to inflate the whole airbag arrangement. This will save space in the vehicle. Further, one inflator is cheaper than two and is also easier to mount in the vehicle.

In an embodiment, wherein the first airbag chamber forms a side impact protection airbag, it comprises a front main chamber and a rear main chamber, the second airbag chamber being connected to the front main chamber. In addition, there may be one or more central chambers. The front main chamber and the rear main chamber may be of about equal geometrical dimensions in the longitudinal direction of the vehicle and the height direction of the vehicle, or the front main chamber may be larger or smaller than the rear main chamber.

The inflatable volume not only depends on the geometrical dimensions of the airbag chamber but also on the possible presence of internal seams. The airbag chamber may comprise internal seams holding the two lateral sides of the airbag chamber together, thereby influencing its inflatable volume. There may further be regions in the airbag chamber completely surrounded by internal seams. Such regions will not be inflatable. Therefore, although the geometrical dimensions, i.e. length, width and height, of a certain airbag chamber are larger than that of another, the inflatable volume may actually be less.

In an embodiment, the second airbag chamber has less inflatable volume than the first airbag chamber; preferably the second airbag chamber has between 10% and 60% of the inflatable volume of the first airbag chamber, more preferably between 20% and 40%.

For an airbag arrangement, wherein the first airbag chamber comprises a front main chamber and a rear main chamber, and in particular when the first airbag chamber is constituted by a front main chamber and a rear main chamber, the inflatable volume of the second airbag chamber may be between 75% and 125% of the inflatable volume of the rear main chamber, preferably between 85% and 115%, most preferably the inflatable volumes of the second airbag chamber and the rear main chamber are substantially the same. This is for example advantageously combined with a valve system as the one described below.

As already mentioned above, the airbag arrangement may further comprise a valve system. The valve system may be used to control the inflation of the rear main chamber, the front main chamber and/or the second airbag chamber. In that case, the valve system comprises at least one valve in between the rear and front main chamber and/or at least one valve between the front main chamber and the second airbag chamber. The at least one valve between the front main chamber and the second airbag chamber is preferably located in the gas duct in between the second airbag chamber and the front main chamber, such that it can be operated as an activation means for the second airbag chamber.

In a second aspect of the present invention, there is provided a vehicle comprising an airbag arrangement as described above.

The vehicle may further comprise at least one sensor for detecting a direction relative to the vehicle of an impact or an imminent impact, the output of said sensor being used to control deployment of the airbag arrangement. In particular, the output from the sensor may be used for determining if the second airbag chamber should be inflated or not and/or if the rear main chamber should be inflated or not. This determination may be based on the detected direction of the impact or imminent impact. The sensor may be a conventionally used crash sensor sensing e.g. deceleration or change of pressure. If a plurality of crash sensors is used, they may be fitted in various positions throughout the vehicle. Their location may depend on the direction of deceleration they are designed to detect. Sensors for detecting a frontal impact may be located in the front bumper, headlights and/or in the vehicle body of the compartment, e.g. at the vehicle centre. Sensors for detecting a side impact may be located in the pillars or the doors of the vehicle. By determining which sensor/sensors of the plurality of sensors that indicate an impact, the direction of the impact may be determined. In particular, the sensors may be accelerometers located in the centre tunnel.

In a third aspect of the present invention there is provided a method of inflating an airbag arrangement as described above, the method comprising:
- detecting a direction relative to the vehicle of an impact or an imminent impact,
- deploying the second airbag chamber if the detected direction is frontal-angled relative to the vehicle, such that the second airbag chamber in the deployed state at least partly covers a portion of the A-pillar and/or a space below the A-pillar.

In particular, the second airbag chamber may at least partly cover a space between the A-pillar and the dashboard of the vehicle.

A frontal-angled impact is defined as an impact against the front end of the vehicle. The impact may be over the whole front end, or, which has a higher probability, a portion of the front end. The impact may be in the longitudinal direction of the vehicle, i.e. perpendicular to the front end of the vehicle, which corresponds to an angle of 0º. The angle is defined as the angle of the resultant collision force when seen in relation to the vehicle comprising the airbag arrangement of the invention. A frontal-angled impact may be defined for angles between -45 º and +45º. A side-angled impact may be defined for angles between +45º and +135º and -45º and -135º, and a rear-angled impact between +135º and -135º, with +180º being equal to -180º, i.e. perpendicular to the rear end of the vehicle, i.e. a straight collision from behind.

For a vehicle comprising a valve system as described above, the method may further comprise the step of
- operating at least one of the valves of the valve system dependent on the detected direction relative to the vehicle of the impact or imminent impact.

In particular, the detected direction may be used for determining if the second airbag chamber should be inflated or not and/or if the rear main chamber should be inflated or not.

The method may comprise that the second airbag chamber is deployed by means of gas having passed at least a portion of the first airbag chamber. Thereby it is possible to use only one inflator for inflating both the first airbag chamber and the second airbag chamber.

For an airbag arrangement comprising a rear main chamber, the method may comprise the step of
- deploying either the rear main chamber or the second airbag chamber, or first deploying one of them and then the other, dependent on the detected direction of the impact or imminent impact relative to the vehicle.

This means that, if the direction of the detected impact is from the side of the vehicle, the rear main chamber will be inflated when inflating the first airbag chamber. There is no need, or at least initially no need, to inflate the second airbag chamber. Optionally, the second airbag chamber may be inflated after the rear main chamber has been inflated.

Further, if the direction of the detected impact is frontal-angled relative to the vehicle, and especially if the impact is obliquely frontal e.g. diagonal of the vehicle, the second airbag chamber will be inflated in order to protect the driver or the passenger in the front seat from being thrown towards the A-pillar. There is no need, or at least initially no need, to also inflate the rear main chamber. Optionally, the rear main chamber may be inflated after the second airbag chamber has been inflated.

### BRIEF DESCRIPTION OF THE DRAWINGS

The present invention will hereinafter be further explained by means of non-limiting examples with reference to the appended drawings wherein:
Fig. 1 is a schematic view of an airbag arrangement according to a first embodiment,
Fig. 2 is a schematic view of an airbag arrangement according to a second embodiment,
Fig. 3 is a schematic view of a collision situation in a vehicle comprising the airbag arrangement of Figure 2,
Fig. 4 is a schematic view of an airbag arrangement according to a third embodiment, and
Fig. 5 is a schematic view of an airbag arrangement according to a fourth embodiment.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

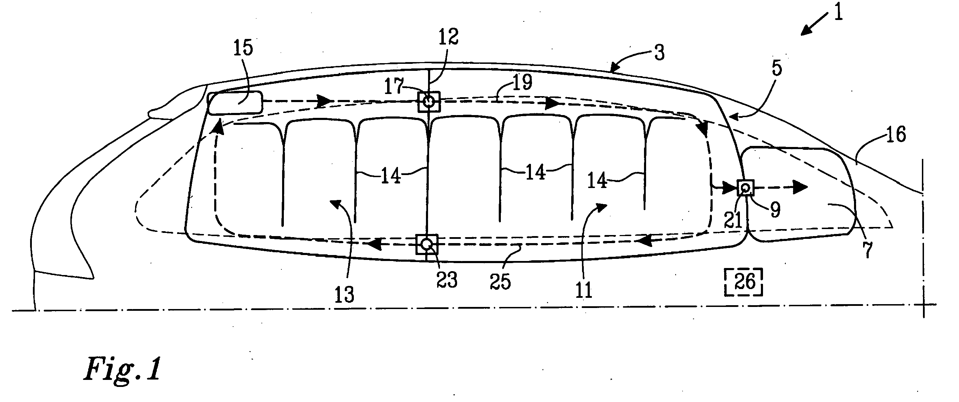

Figure 1 schematically illustrates a vehicle 1 comprising an airbag arrangement 3 in a deployed state according to a first embodiment of the disclosure. When not in use, i.e. in an undeployed state, the airbag arrangement 3 is stored in a folded or rolled-up condition, e.g. along the roof line of the vehicle 1, in a manner well known by the skilled person. The airbag arrangement 3 comprises a first airbag chamber 5 forming a side impact protection airbag and a second airbag chamber 7. The second airbag chamber 7 forms a separate unit having an inflatable volume, which is separate from the first airbag chamber 5 except for a connection, here in the form of a gas duct 9, connecting the first airbag chamber 5 and the second airbag chamber 7. The second airbag chamber 7 is much smaller than the first airbag chamber 5, as may be gleaned from the figure. The first airbag chamber 5 comprises a front main chamber 11 and a rear main chamber 13 divided by a wall 12. Further, the first airbag chamber 5 comprises a number of internal seams 14 controlling the flow of the inflating gas and the geometry of the first airbag chamber 5 in the deployed state. The airbag arrangement 3 is provided with an inflator, here a gas generator 15, located in the rear main chamber 13.

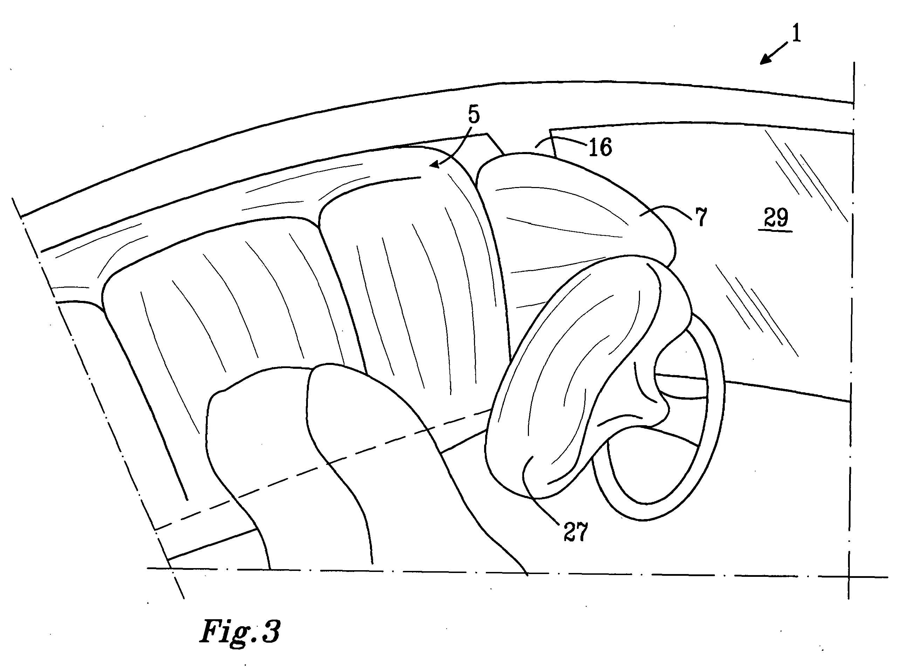

The second airbag chamber 7 is connected to the front main chamber 11. In the illustrated embodiment, there is no separate inflator for the second airbag chamber 7. Instead, the second airbag chamber 7 is adapted to be inflated by the gas generated by the gas generator 15 of the first airbag chamber 5. The gas then passes via the first airbag chamber 5, through the gas duct 9 into the second airbag chamber 7. The second airbag chamber 7 is located such that it, in a deployed state, will at least partly cover the space between the first airbag chamber 5 and a driver/passenger airbag (not illustrated), as described below in conjunction with Figure 3. The second airbag chamber 7 when deployed partly covers at least a portion of an A-pillar 16 and the space below the A-pillar.

The first airbag chamber 5 comprises a valve system with three valves. A first valve 17 is located in an opening in the wall 12 between the rear main chamber 13 and the front main chamber 11, such that the first valve 17 can control the gas flow from the gas generator 15 along an upper channel 19 of the first airbag chamber 5. A second valve 21 controls the gas flow through the gas duct 9. The second valve 21 thus acts as an activation means for the second airbag chamber 7. A third valve 23 is located in an opening in the wall 12 between the front main chamber 11 and the rear main chamber 13 and, such that the third valve 23 can control the gas flow along a lower channel 25 of the first airbag chamber 5. In Figure 1, dashed lines indicate gas streams, with the arrows showing the main direction of the gas stream.

The vehicle 1 further comprises at least one sensor 26 for detecting a direction relative to the vehicle of an impact or an imminent impact, e.g. a crash sensor. The direction of the detected impact or imminent impact is used for operating the above-mentioned valves 17, 21,23.

If the direction of the detected impact is from the side of the vehicle 1, there is no need, or at least initially no need, to inflate the second airbag chamber 7. The second valve 21 will thus be closed and the gas from the gas generator 15 will inflate the front main chamber 11 and the rear main chamber 13 with the first valve 17 and third valve 23 being open to let the gas through. Optionally, the second airbag chamber 7 may be inflated after the rear main chamber 13 has been inflated.

If the direction of the detected impact is frontal-angled with respect to the vehicle 1 and especially if the impact is obliquely frontal-angled, e.g. diagonal of the vehicle 1, the second airbag chamber 7 will be inflated in order to protect the driver or the passenger in the front seat from impacting with the A-pillar 16. The first valve 17 and the second valve 21 will thus be open. The third valve 25 will be closed, since there is no need, or at least initially no need, to also inflate the rear main chamber 13. Optionally, the rear main chamber 13 may be inflated after the second airbag chamber 7 has been inflated.

In the illustrated embodiment, the second airbag chamber 7 is thus only inflated when a predetermined condition is met, i.e. when the impact is at least partly from the front of the vehicle 1. In the same way, the rear main chamber 13 is only inflated when another predetermined condition is met, i.e. when the impact is from the side of the vehicle 1. Therefore, one gas generator is sufficient for filling the airbag arrangement 3 of Figure 1.

The embodiments above describe a case wherein the valves 17, 21, 23 are operated based on information from the at least one sensor 26 for detecting a direction relative to the vehicle of an impact or an imminent impact, e.g. crash sensors. As an alternative, the second valve 21 leading into the second airbag chamber 7 could be opened when a limit pressure has been reached in the front main chamber 11, i.e. a pressure controlled valve instead of the above-mentioned sensor-controlled valve.

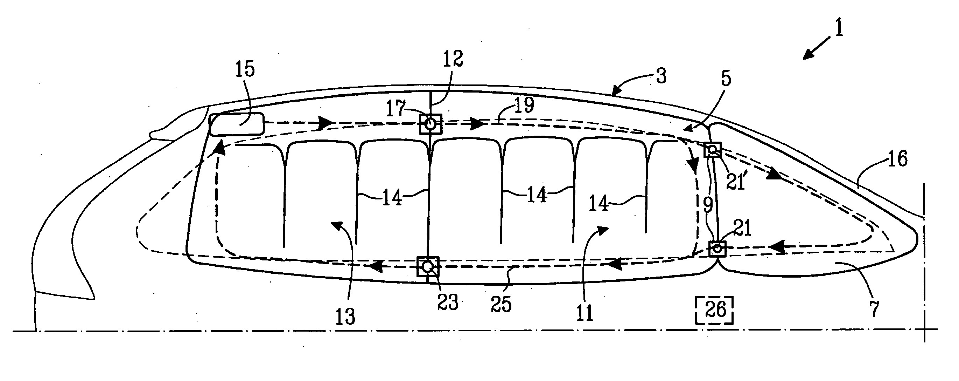

Figure 2 illustrates a second embodiment of the airbag arrangement 3 of the present invention. Similar as for Figure 1, the first airbag chamber 5 comprises a front main chamber 11 and a rear main chamber 13. The second airbag chamber 7 is connected to the first airbag chamber 5 by means of two gas ducts 9. A similar valve system to the one described in Figure 1 controls the gas flow in the airbag arrangement, but in this case there are two second valves 21, 21' for the two gas ducts 9. Details similar to the ones of Figure 1 will not be described again.

The inflatable volume of the rear main chamber 13 is substantially the same as the inflatable volume of the second airbag chamber 7. This is advantageous when selecting the capacity of the gas generator 15, since a similar amount of gas will be needed for inflating the front main chamber 11 and the second airbag chamber 7 in case of a frontal-angled impact, and the front main chamber 11 and the rear main chamber 13 in case of a side impact.

The second airbag chamber 7 is large enough to in a deployed state cover most of the A-pillar along the windscreen. It thus provides a good protection for the driver or front seat passenger.

Figure 3 illustrates a collision situation for the airbag arrangement 3 of Figure 2, in which it is seen that the second airbag chamber 7 at least partly fills the space in between the first airbag chamber 5 covering the side wall of the vehicle compartment and the driver airbag 27, which has been deployed from the steering column. The first airbag chamber 5 protects the driver from intruding side structures of the vehicle. The driver airbag 27 prevents the driver from impacting with the steering column, dashboard and windscreen 29. The second airbag chamber 7 partly covers a portion of the A-pillar 16, thereby preventing the driver from impacting with the A-pillar 16. The second airbag chamber 7 also covers a space between the A-pillar 16 and the dashboard.

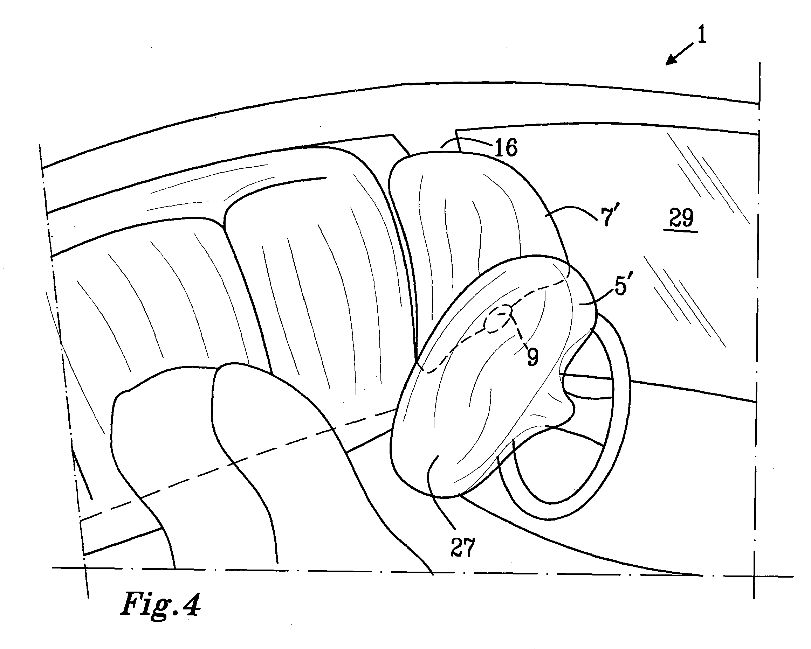

Figure 4 illustrates a third embodiment of the airbag arrangement 3 of the present inventtion. The second airbag chamber 7' is connected to the first airbag chamber 5' forming the driver airbag 27. The steering wheel may be of the kind having a fixed centre, such that the second airbag chamber 7' is deployed in the desired direction for at least covering a portion of the A-pillar 16. In addition, the second airbag chamber 7' covers at least partly a space between the A-pillar and the dashboard. Thereby, the space in between the side impact protection airbag and the driver airbag 27 is at least partly covered. The second airbag chamber 7' may have its own inflator or use that of the driver airbag 27.

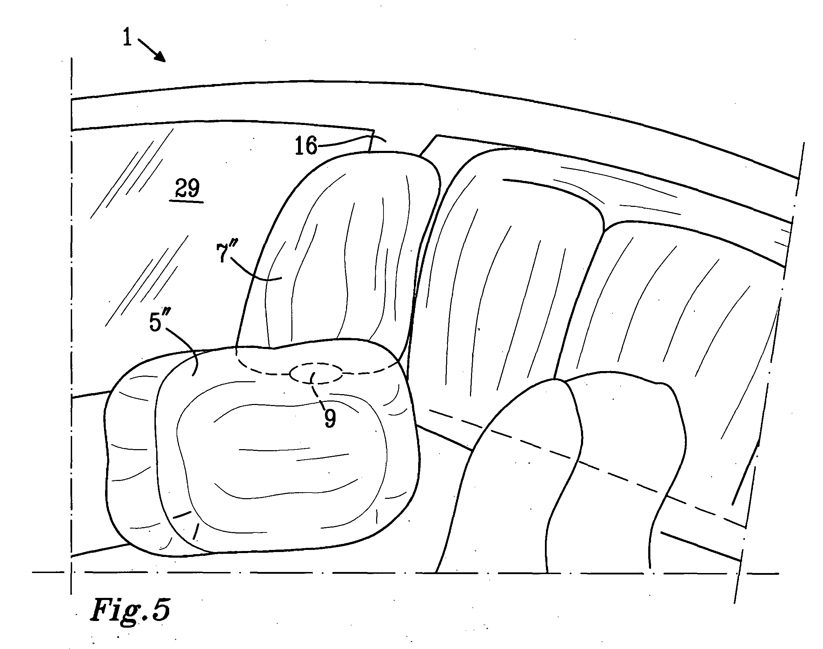

Figure 5 illustrates a fourth embodiment of the airbag arrangement 3 of the present invention. The second airbag chamber 7" is connected to the first airbag chamber 5" forming a passenger airbag 31, which may be located in the dashboard, such that the second airbag chamber 7" is deployed in the desired direction for at least covering a portion of the A-pillar 16. In addition, the second airbag chamber 7" covers at least partly a space between the A-pillar and the dashboard. Thereby, the space in between the side impact protection airbag and the passenger airbag 31 may be at least partly covered. The second airbag chamber 7' may have its own inflator or use that of the passenger airbag 31.

Further modifications of the invention within the scope of the appended claims are feasible. In particular, the number of connections between the first and second airbag chambers and their relative sizes may be varied. As such, the present invention should not be considered as limited by the embodiments and figures described herein.

## Claims

1. An airbag arrangement (3) for a vehicle (1), said airbag arrangement (3) comprising
- an inflatable first airbag chamber (5, 5', 5"), and
- an inflatable second airbag chamber (7, 7', 7"),
said second airbag chamber (7, 7', 7") forms a separate, optionally inflatable, airbag chamber connected to said first airbag chamber (5, 5', 5"),
said second airbag chamber (7, 7', 7") is adapted to in a deployed state at least partly cover a portion of an A-pillar (16) of said vehicle (1) and/or a space below the A-pillar (16),
said connection between said first airbag chamber (5, 5', 5") and said second airbag chamber (7, 7', 7") forms at least one gas duct (9),
said first airbag chamber (5, 5', 5") comprises an inflator (15), such as a gas generator, for at least partly inflating said first airbag chamber (5, 5', 5"), said inflator (15) also being used for inflating said second airbag chamber (7, 7', 7"),
said first airbag chamber (5) forms a side impact protection airbag comprising a front main chamber (11) and a rear main chamber (13), said second airbag chamber (7) being connected to said front main chamber (11),
**characterized in that**
said airbag arrangement (3) further comprising a valve system, wherein the inflation of said rear main chamber (13), said front main chamber (11) and said second airbag chamber (7) is controlled by said valve system, said valve system comprising at least one valve (17, 23) in between said rear (13) and front main chamber (11) and at least one valve (21) between said front main chamber (11) and said second airbag chamber (7).

2. The airbag arrangement (3) according to claim 1, wherein said second airbag chamber (7, 7', 7") is adapted to in a deployed state further cover at least partly a space between said A-pillar (16) and a dashboard of said vehicle.

3. The airbag arrangement (3) according to any one of the previous claims, wherein the inflatable volume of said second airbag chamber (7) is between 75% and 125% of the inflatable volume of said rear main chamber (13), preferably between 85% and 115%, most preferably the inflatable volumes being substantially the same.

4. A vehicle (1) comprising an airbag arrangement (3) according to any one of the previous claims.

5. The vehicle (1) according to claim 4 further comprising at least one sensor (26) for detecting a direction relative to the vehicle of an impact or an imminent impact (1), the output of said sensor being used to control deployment of said airbag arrangement (3).

6. The vehicle according to claim 5, wherein the output of said sensor (26) is used for determining if the second airbag chamber (7) should be inflated or not and if the rear main chamber (13) should be inflated or not.

7. A method of inflating an airbag arrangement (3) for a vehicle (1) according to any one of claims 1-3, said method comprising
- detecting a direction relative to the vehicle (1) of an impact or an imminent impact,
- deploying said second airbag chamber (7, 7', 7") if said detected direction is frontal-angled relative to said vehicle (1), such that said second airbag chamber (7, 7', 7") in the deployed state at least partly covers a portion of an A-pillar (16) of said vehicle (1) and/or a space below the A-pillar (16),
- operating at least one of the valves (17, 21, 23) of said valve system dependent on said detected direction relative to the vehicle (1) of said impact or imminent impact,
- deploying either said rear main chamber (13) or said second airbag chamber (7, 7', 7"), or first deploying one of them and then the other, dependent on said detected direction relative to the vehicle (1) of said impact or imminent impact.

8. The method of claim 7, wherein said second airbag chamber (7, 7', 7") is inflated by means of gas having passed at least a portion of said first airbag chamber (5, 5', 5").

## Patentansprüche

1. Airbaganordnung (3) für ein Fahrzeug (1), wobei die Airbaganordnung (3) umfasst:
- eine aufblasbare erste Airbagkammer (5, 5', 5") und
- eine aufblasbare zweite Airbagkammer (7, 7', 7")
wobei die zweite Airbagkammer (7, 7', 7") eine separate, wahlweise aufblasbare Airbagkammer bildet, die mit der ersten Airbagkammer (5, 5', 5") verbunden ist, wobei die zweite Airbagkammer (7, 7', 7") ausgelegt ist, um in einem entfalteten Status mindestens teilweise einen Abschnitt einer A-Säule (16) des Fahrzeugs (1) und/oder einen Raum unterhalb der A-Säule (16) abzudecken,
wobei die Verbindung zwischen der ersten Airbagkammer (5, 5', 5") und der zweiten Airbagkammer (7, 7', 7") mindestens einen Gaskanal (9) bildet, wobei die erste Aribagkammer (5, 5', 5") eine Aufblasvorrichtung (15), wie z. B. einen Gasgenerator, zum mindestens teilweise Aufblasen der ersten Airbagkammer (5, 5', 5") umfasst, wobei die Aufblasvorrichtung (15) auch zum Aufblasen der zweiten Airbagkammer (7, 7', 7") verwendet wird,
wobei die erste Airbagkammer (5) einen Seitenaufprallschutz-Airbag bildet, der eine vordere Hauptkammer (11) und eine hintere Hauptkammer (13) umfasst, wobei die zweite Aribagkammer (7) mit der vorderen Hauptkammer (11) verbunden ist,
**dadurch gekennzeichnet, dass**
die Airbaganordnung (3) ferner ein Ventilsystem umfasst, wobei das Aufblasen der hinteren Hauptkammer (13), der vorderen Hauptkammer (11) und der zweiten Airbagkammer (7) von dem Ventilsystem gesteuert wird, wobei das Ventilsystem mindestens ein Ventil (17, 23) zwischen der hinteren (13) und vorderen Hauptkammer (11) und mindestens ein Ventil (21) zwischen der vorderen Hauptkammer (11) und der zweiten Airbagkammer (7) umfasst.

2. Airbaganordnung (3) nach Anspruch 1, wobei die zweite Airbagkammer (7, 7', 7") ausgelegt ist, um in einem entfalteten Status weiterhin mindestens teilweise einen Raum zwischen der A-Säule (16) und einem Armaturenbrett des Fahrzeugs abzudecken.

3. Airbaganordnung (3) nach einem der vorhergehenden Ansprüche, wobei das aufblasbare Volumen der zweiten Airbagkammer (7) zwischen 75 % und 125 % des aufblasbaren Volumens der hinteren Hauptkammer (13) beträgt, vorzugsweise zwischen 85 % und 115 %, wobei am meisten bevorzugt die aufblasbaren Volumina im Wesentlichen gleich sind.

4. Fahrzeug (1), umfassend eine Airbaganordnung (3) nach einem der vorhergehenden Ansprüche.

5. Fahrzeug (1) nach Anspruch 4, ferner umfassend mindestens einen Sensor (26), um eine Richtung in Bezug auf das Fahrzeug eines Aufpralls oder eines drohenden Aufpralls (1) zu erkennen, wobei die Ausgabe des Sensors zum Steuern der Entfaltung der Airbaganordnung (3) verwendet wird.

6. Fahrzeug nach Anspruch 5, wobei die Ausgabe des Sensors (26) verwendet wird, um zu bestimmen, ob die zweite Airbagkammer (7) aufgeblasen werden soll oder nicht und ob die hintere Hauptkammer (13) aufgeblasen werden soll oder nicht.

7. Verfahren zum Aufblasen einer Airbaganordnung (3) für ein Fahrzeug (1) nach einem der Ansprüche 1 bis 3, wobei das Verfahren umfasst:
- Erkennen einer Richtung in Bezug auf das Fahrzeug (1) eines Aufpralls oder eines drohenden Aufpralls,
- Entfalten der zweiten Airbagkammer (7, 7', 7"), wenn die erkannte Richtung in Bezug auf das Fahrzeug (1) frontal abgewinkelt ist, sodass die zweite Airbagkammer (7, 7', 7") in dem entfalteten Status mindestens teilweise einen Abschnitt einer A-Säule (16) des Fahrzeugs (1) bedeckt, und/oder einen Raum unterhalb der A-Säule (16),
- Betreiben mindestens eines der Ventile (17, 21, 23) des Ventilsystems in Abhängigkeit von der erfassten Richtung in Bezug auf das Fahrzeug (1) des Aufpralls oder drohenden Aufpralls,
- Entfalten entweder der hinteren Hauptkammer (13) oder der zweiten Airbagkammer (7, 7', 7") oder zuerst Entfalten einer davon und danach der anderen, je nach der erfassten Richtung in Bezug auf das Fahrzeug (1) des Aufpralls oder des drohenden Aufpralls.

8. Verfahren nach Anspruch 7, wobei die zweite Airbagkammer (7, 7', 7") mittels Gas aufgeblasen wird, das mindestens zum Teil einen Abschnitt der ersten Airbagkammer (5, 5', 5") durchlaufen hat.

## Revendications

1. Système de coussin de sécurité (3) pour un véhicule (1), ledit système de coussin de sécurité (3) comprenant
- une première chambre de coussin de sécurité (5, 5', 5'') gonflable, et
- une seconde chambre de coussin de sécurité (7, 7', 7'') gonflable,
ladite seconde chambre de coussin de sécurité (7, 7', 7'') formant une chambre de coussin de sécurité distincte, gonflable de façon optionnelle, raccordée à ladite première chambre de coussin de sécurité (5, 5', 5''),
ladite seconde chambre de coussin de sécurité (7, 7', 7'') étant conçue pour, dans un état déployé, recouvrir au moins partiellement une partie d'un montant avant (16) dudit véhicule (1) et/ou un espace situé sous le montant avant (16),
ledit raccordement entre ladite première chambre de coussin de sécurité (5, 5', 5'') et ladite seconde chambre de coussin de sécurité (7, 7', 7'') formant au moins un conduit de gaz (9), ladite première chambre de coussin de sécurité (5, 5', 5'') comprenant un dispositif de gonflage (15), tel qu'un dispositif de génération de gaz, servant à gonfler au moins partiellement ladite première chambre de coussin de sécurité (5, 5', 5''), ledit dispositif de gonflage (15) étant également utilisé pour gonfler ladite seconde chambre de coussin de sécurité (7, 7', 7''), ladite première chambre de coussin de sécurité (5) formant un coussin de sécurité de protection contre les impacts latéraux comprenant une chambre principale avant (11) et une chambre principale arrière (13), ladite seconde chambre de coussin de sécurité (7) étant raccordée à ladite chambre principale avant (11),
**caractérisé en ce que**
ledit système de coussin de sécurité (3) comprend en outre un système de valves, le gonflage de ladite chambre principale arrière (13), de ladite chambre principale avant (11) et de ladite seconde chambre de coussin de sécurité (7) étant régulé par ledit système de valves, ledit système de valves comprenant au moins une valve (17, 23) entre lesdites chambres principales arrière (13) et avant (11) et au moins une valve (21) entre ladite chambre principale avant (11) et ladite seconde chambre de coussin de sécurité (7).

2. Système de coussin de sécurité (3) selon la revendication 1, dans lequel ladite seconde chambre de coussin de sécurité (7, 7', 7'') est conçue pour, dans un état déployé, recouvrir en outre au moins partiellement un espace entre ledit montant avant (16) et un tableau de bord dudit véhicule.

3. Système de coussin de sécurité (3) selon l'une quelconque des revendications précédentes, dans lequel le volume gonflable de ladite seconde chambre de coussin de sécurité (7) est compris entre 75 % et 125 % du volume gonflable de ladite chambre principale arrière (13), de préférence entre 85 % et 115 %, les volumes gonflables étant, de la façon la plus préférable, essentiellement identiques.

4. Véhicule (1) comprenant un système de coussin de sécurité (3) selon l'une quelconque des revendications précédentes.

5. Véhicule (1) selon la revendication 4, comprenant en outre au moins un capteur (26) servant à détecter une direction, par rapport au véhicule (1), d'un impact ou d'un impact imminent, la sortie dudit capteur étant utilisée pour commander le déploiement dudit système de coussin de sécurité (3).

6. Véhicule selon la revendication 5, dans lequel la sortie dudit capteur (26) est utilisée pour déterminer si la seconde chambre de coussin de sécurité (7) devrait être gonflée ou non et si la chambre principale arrière (13) devrait être gonflée ou non.

7. Procédé de gonflage d'un système de coussin de sécurité (3) pour un véhicule (1) selon l'une quelconque des revendications 1 à 3, ledit procédé comprenant
- détecter une direction, par rapport au véhicule (1), d'un impact ou d'un impact imminent,
- déployer ladite seconde chambre de coussin de sécurité (7, 7', 7'') si ladite direction détectée est orientée de façon frontale par rapport audit véhicule (1), de telle sorte que ladite seconde chambre de coussin de sécurité (7, 7', 7''), dans l'état déployé, recouvre au moins partiellement une partie d'un montant avant (16) dudit véhicule (1) et/ou un espace situé sous le montant avant (16),
- mettre en oeuvre au moins une des valves (17, 21, 23) dudit système de valves en fonction de ladite direction détectée, par rapport au véhicule (1), dudit impact ou dudit impact imminent,
- déployer soit ladite chambre principale arrière (13), soit ladite seconde chambre de coussin de sécurité (7, 7', 7''), ou déployer d'abord l'une d'elles, puis l'autre, en fonction de ladite direction détectée, par rapport au véhicule (1), dudit impact ou dudit impact imminent.

8. Procédé selon la revendication 7, dans lequel ladite seconde chambre de coussin de sécurité (7, 7', 7'') est gonflée au moyen de gaz ayant traversé au moins une partie de ladite première chambre de coussin de sécurité (5, 5', 5'').
